# EUROPEAN PATENT SPECIFICATION

(11) **EP 4 251 665 B1**
(45) Date of publication and mention of the grant of the patent: **08.01.2025**
(21) Application number: 21807154.6
(22) Date of filing: 22.11.2021
(51) Int. Cl.: C08F 287/00, C08F 293/00

(54) **PROCESS OF PRODUCING POLYMER DISPERSIONS**
VERFAHREN ZUR HERSTELLUNG VON POLYMERDISPERSIONEN
PROCÉDÉ DE PRODUCTION DE DISPERSIONS DE POLYMÈRE

(30) Priority: 30.11.2020 EP 20210758
(43) Date of publication of application: 04.10.2023
(73) Proprietor: BASF SE, 67056 Ludwigshafen am Rhein (DE)
(72) Inventor: AMIRI NAINI, Crispin, 67056 Ludwigshafen (DE); GERNANDT, Andreas, 67056 Ludwigshafen (DE); AUSCHRA, Clemens, 67056 Ludwigshafen (DE); RECK, Bernd, 67056 Ludwigshafen (DE)
(74) Representative: BASF IP Association
(86) International application number: PCT/EP2021/082548
(87) International publication number: WO 2022/112190

(56) References cited:
- WO-A1-2009/065774
- CN-A- 111 057 198
- US-A1- 2002 061 988

## Description

The present invention provides a process of producing a polymeric dispersion by free radical emulsion polymerization of a monomer composition comprising ethylenically unsaturated monomers in the presence of a block copolymer.

Over the years, water-based binders have increasingly replaced solvent-based binders. Such binders are produced by aqueous emulsion polymerization. For the production of aqueous polymer dispersions, stable monomer/water emulsions are a prerequisite. For this purpose, emulsifiers - usually surfactants - are required which enable the formation of an emulsion under dispersion. An expert also sees the difference here to protective colloids, which are usually higher molecular compounds that stabilize dispersions but do not allow the formation of an emulsion.

It is generally known that amphiphilic block copolymers dissolved in water are capable of acting like classical surfactants if the hydrophobic and hydrophilic blocks contained are of suitable length, and it is for this reason that they are also referred to as polymeric surfactants and are recommended, inter alia, as dispersants for stabilizing aqueous polymer dispersions. EP-A 665 240 recommends, for example, block copolymers poly(r alkyl methacrylate - b-s methacrylic acid) where r and s are each from 4 to 20, as dispersants in aqueous polymer dispersions. Polymer Preprints (Am. Chem. Soc. Div. Polym. Chem.) 29 (1988), 425-426, recommends two-block polymers poly(p alkyl methacrylate/*a*-methylstyrene - b - q sulfonated glycidyl methacrylate) where p is <20, as dispersant in aqueous polymer dispersions.

Controlled free radical polymerization is a radical polymerization process carried out with starters that form stabilized radicals and exhibit controlled growth. Since radical termination reactions are hardly possible, polymers can be built up in a very controlled manner. Depending on the radical generation mechanisms, a distinction is made between ATRP, RAFT and NOR = NMP.

WO 2006/066971 teaches the use of a block copolymer with a hydrophilic block build with at least 55 mol% of the total monomers and a hydrophobic block as macromolecular surfactants for emulsion free-radical polymerization. The hydrophilic block units derivating from acrylic acid. In the process WO 2006/066971 teaches a nitroxyl mediated polymerization of a mixture of acrylic acid and styrene. Due to the different reactivity of the monomers, the result is a polymer in which the monomers are not statistically distributed, but have a gradient.

EP 0887 362 teaches a block copolymer with a hydrophobic and a hydrophilic block which is prepared by controlled free radical polymerization process (NMP polymerization) starting with the hydrophobic block and adding hydrophilic monomer to the stabilized active hydrophobic block and further growing a hydrophilic block. Aromatics and alkyl (meth)acrylates are mentioned as suitable monomers underlying the repeating units of the hydrophobic block. Suitable monomers for the hydrophilic block are unsaturated carboxylic and sulfonic acids. The block copolymers prepared according to this teaching are useful as surfactants for emulsion polymerizations or for stabilization of latex particles. If such styrene block copolymers are used as dispersing agents for the production of dispersions, the latter often show defects when dried to a film.

DE 196 02 538 relates to a process for the preparation of an aqueous polymer dispersion by polymerizing monomers having at least one vinyl group by the free radical aqueous emulsion polymerization method, in which an amphiphilic substance is added to the polymerization vessel before and/or during the polymerization. DE 196 02 538 teaches styrene/methacrylic acid block copolymers as amphiphilic substances that are produced by means of living polymerization. The examples describe an anionic polymerization with butyl lithium as a living polymerization. Anionic polymerization cannot be used to polymerize monomers containing free acid groups. The block copolymers used here can therefore only be produced by a very complex synthesis route.

However, the suitability of state-of-the-art block copolymers as dispersants in emulsion polymerization processes is strongly pH-dependent. Many block copolymers can only be used in a narrow pH range, which greatly limits the polymerization process.

It was therefore an object of the present invention to provide new block copolymers that can be used as stabilizers over a wide pH range in emulsion polymerization processes. Furthermore, they should also lead to stable dispersions, especially in the acidic pH range.

In general, they should have emulsifier properties comparable to those of surfactants. In contrast to dispersions produced with surfactants, the water phase should be low in emulsifiers, i.e. the water phase should have a high surface tension.

It was therefore an object of the present invention to provide a process of producing a polymeric dispersion by free radical emulsion polymerization, having a high surface tension. The process should enable to polymerizations over a wide pH range.

The object was achieved by a process of producing an polymeric dispersion by free radical emulsion polymerization of a monomer composition comprising ethylenically unsaturated monomers in the presence of a block copolymer, whereas the block copolymer has a first block comprising at least 80 wt.-% units of alkyl acrylate and a second block comprising units of an ethylenically unsaturated monomer with sulfonic acid groups whereas either the first or the second block is connected with a nitroxyl radical.

Preferably the second block, comprising the units of an ethylenically unsaturated monomer with sulfonic acid groups, has a terminal group which is a nitroxyl radical.

A further object of the invention is the block copolymer used in the process of the present invention and its use as emulsifying agent for free radical emulsion polymerization. A further object of the invention is the polymeric dispersion obtainable by the inventive process.

Here and throughout the specification, the prefixes Cₙ-Cₘ used in connection with compounds or molecular moieties each indicate a range for the number of possible carbon atoms that a molecular moiety or a compound can have. The term "C₁-Cₙ alkyl" denominates a group of linear or branched saturated hydrocarbon radicals having from 1 to n carbon atoms. For example, the term C₁-C₂₀ alkyl denominates a group of linear or branched saturated hydrocarbon radicals having from 1 to 20 carbon atoms, while the term C₁-C₄ alkyl denominates a group of linear or branched saturated hydrocarbon radicals having from 1 to 4 carbon atoms. Examples of alkyl include but are not limited to methyl, ethyl, n-propyl, isopropyl, n-butyl, sec-butyl, isobutyl, tert-butyl, 2-methylpropyl (isopropyl), 1,1-dimethylethyl (tert.-butyl), pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, heneicosyl docosyl and their isomers. Examples of C₁-C₄-alkyl are for example methyl, ethyl, propyl, 1-methylethyl, butyl, 1-methylpropyl, 2-methylpropyl or 1,1-dimethylethyl.

The term "polymerization conditions" is generally understood to mean those temperatures and pressures under which the free-radically initiated aqueous emulsion polymerization proceeds at sufficient polymerization rate. They depend particularly on the free-radical initiator used. Advantageously, the type and amount of the free-radical initiator, polymerization temperature and polymerization pressure are selected such that a sufficient amount of initiating radicals is always present to initiate or to maintain the polymerization reaction.

Here and throughout the specification, the term "pphm" (parts per hundred monomers) is used as a synonym for the relative amount of a certain monomer to the total amount of monomer in % by weight. For example, x pphm monomer M means x % by weight of monomers M, based on the total amount of monomers.

Here and throughout the specification, the term "(meth)acryl" includes both acryl and methacryl groups. Hence the term "(meth)acrylate" includes acrylate and methacrylate and the term "(meth)acrylamide" includes acrylamide and methacrylamide.

The terms "wt.-%" and "% by weight" are used synonymously.

By a controlled free radical polymerization - often referred to as living polymerization - is meant a polymerization in which the radicals are not present permanently as free radicals on the chain ends of the growing polymer chain, but instead, in contrast to the situation with a conventional radical polymerization, are present in equilibrium with a nonradical form, as a result of dissociation/recombination processes, and are continually being formed anew under polymerization conditions.

The term block copolymer refers to polymers whose molecules consist of preferably linear, linked blocks, the blocks being bonded to one another directly, and the term block meaning a segment of a polymer molecule which comprises a plurality of identical constitutional units and has at least one constitutional or configurative feature which does not occur in the directly adjacent segments. The block copolymers according the present invention consist of at least two blocks.

The process allows enhanced control over polydispersity and allows production of polymers within a narrow molecular weight distribution.

According to the invention, the process is carried out in the presence of a block copolymer. The block copolymer of the present invention is prepared by controlled free radical polymerization of at least 80 wt-% based on the weight of the monomers of the A block of alkyl acrylate, preferably n-butyl acrylate, which builds the first block and monomers comprising at least a sulfonic acid groups bearing ethylenically unsaturated monomers which builds the second block (B block).

The first block comprises at least 80 wt.% units of alkyl acrylate. This means that this first block is composed to an extent of at least 80 wt.%, more particularly at least 90 wt.%, especially at least 95 wt.%, or at least 99 wt.%, based on A, respectively based on the total amount of the constituent monomers M of the polymer block A, or entirely, of alkyl acrylate.

Suitable alkyl acrylates are esters of monoethylenically acrylic acid with C₄-C₂₀-alkanols, examples being n-butyl acrylate, 2-butyl acrylate, isobutyl acrylate, tert-butyl acrylate, n-hexyl acrylate, 2-ethylhexyl acrylate, 3-propylheptyl acrylate, decyl acrylate, lauryl acrylate and stearyl acrylate. Preferred is n-butylacrylate.

As additional monomers of the first block it is possible to use for example styrene, C₁-C₄ alkyl substituted styrene, hydroxyalkyl esters of the α,β-unsaturated C₃-C₆ carboxylic acids, for example 2-hydroxyethyl acrylate, 3-hydropxypropyl acrylate, 4-hydroxybutyl acrylate, hydroxyethyl methacrylate, hydroxypropyl methacrylate, polyethylene glycol mono(meth)acrylate where polyethylene glycol vary from 1 - 22 repeating units or mixtures thereof. If these additional monomers are present, they are present in an amount up to 20 wt.%, preferably up to 10 wt.%, especially up to 5 wt.%.

The second block comprises units of the ethylenically unsaturated monomer with sulfonic acid groups. This means that this second block is composed to preferably an extent of at least 20 wt.%, more particularly at least 50 wt.%, especially at least 80 wt.%, or at least 90 wt.%, based on B, respectively based on the total amount of the constituent monomers M of the polymer block B, or entirely, of monoethylenically unsaturated monomers with sulfonic acid groups.

Suitable ethylenically unsaturated monomers with sulfonic acid groups are preferably vinylsulfonic acid, 4-styrene sulfonic acid, 2-acrylamido-2-methylpropane sulfonic acid, sulfopropyl acrylate und sulfopropyl methacrylat. The ethylenically unsaturated monomer with sulfonic acid groups can be used as monomers in the form of the free acid as well as in their partially or completely neutralized form. Preferably, sodium hydroxide, potash or ammonia is used as a neutralizing agent. Styrene sulfonic acid and its alkali or ammonium salts are preferred. Especially sodium styrene sulfonate is preferred.

As additional monomers of the second block it is possible to use the amides and the hydroxyalkyl esters of the α,β-unsaturated C₃-C₆ carboxylic acids, for example acrylamide, methacrylamide, 2-hydroxyethyl acrylate, 2-hydroxyethyl methacrylate, 2-hydroxypropyl (meth)acrylate or 1,4-butanediol monoacrylate, α,β-unsaturated C₃-C₆ carboxylic acids, α,β-unsaturated C₄-C₈ dicarboxylic acids, or anhydrides thereof, such as acrylic acid, methacrylic acid, crotonic acid, fumaric acid, maleic acid, maleic anhydride, itaconic acid, and itaconic anhydride, and also the alkali metal salts or ammonium salts of the stated monomers, especially their sodium salts.

Furthermore esters of monoethylenically unsaturated C₃-C₆ monocarboxylic acids with polyether monools, more particularly with C₁-C₂₀ alkylpoly-C₂-C₄ alkylene glycols, especially with C₁-C₂₀ alkyl polyethylene glycols, the alkylpolyalkylene glycol radical typically having a molecular weight in the range from 200 to 5000 g/mol (numerical average), more particularly the aforementioned esters of acrylic acid and also the aforementioned esters of methacrylic acid are suitable.

Furthermore, N-vinylpyrrolidone, phosphate esters of polyethylene glycol mono(meth)acrylate and its water-soluble salts where polyethylene glycol vary from 1 - 22 repeating units can be used.

Since the alkyl acrylate is a hydrophobic group whereas the sulfonic acid groups bearing ethylenically unsaturated monomer is a hydrophilic group the block copolymer is an amphiphilic substance.

Preferably the block copolymer of the invention has a terminal group of the formula Z 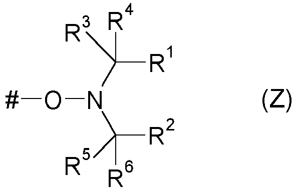 in which # denotes the attachment to a C atom of the polymer block,
- R¹ and R²: independently of one another are C₁-C₂₀ alkyl which optionally carries a substituent selected from C₁-C₄ alkoxy, C₁-C₄ alkoxy-C₁-C₄ alkoxy and PO₃R^{z}₂, and R^{z} is C₁-C₄ alkyl, or are phenyl or are C₇-C₁₈ aralkyl or
- R¹ and R²: together are linear C₂-C₁₀ alkylene or linear C₂-C₁₀ alkenylene in which optionally one or two CH₂ groups may have been independently of another replaced by O, C=O, C=NOH, CH-OCOCH₃ or NR^{x}, where linear C₂-C₁₀ alkylene and linear C₂-C₁₀ alkenylene are unsubstituted or have 1, 2, 3, 4 or 5 substituents from the group C₁-C₄ alkyl, C₁-C₄ alkoxy, C₁-C₄ alkoxy-C₁-C₄ alkoxy, COOH, and CONH₂, and R^{x} is C₁-C₄ alkyl or C₁-C₄ alkoxy;
- R³: is C₁-C₄ alkyl or H
- R⁴, R⁵, and R⁶: independently of one another are C₁-C₄ alkyl, and more particularly methyl or ethyl.

In formula Z preferably R¹ and R² together are linear C₂-C₁₀ alkylene, in which, optionally, one or two CH₂ groups may have been replaced by O, C=O and/or NR^{x}, and where linear C₂-C₁₀ alkylene is unsubstituted or has 1, 2, 3, or 4 substituents from the group of C₁-C₄ alkyl, C₁-C₄ alkoxy, C₁-C₄ alkoxy-C₁-C₄ alkoxy, COOH, and CONH₂, and R^{x} is C₁-C₄ alkyl or C₁-C₄ alkoxy.

In formula Z more particularly R¹ and R² together are linear C₂-C₄ alkylene and especially are 1,3-propanediyl, in which optionally one or two CH₂ groups may have been replaced by O, C(=O), or NR^{x}, where linear C₂-C₄ alkylene or 1,3-propanediyl is unsubstituted or has 1, 2, 3, or 4 substituents from the group of C₁-C₄ alkyl and C₁-C₄ alkoxy, and R^{x} is C₁-C₄ alkyl, especially methyl.

In a more preferred embodiment of the presently claimed invention, the stable free nitroxyl radical is selected from the group consisting of radicals with the formula Za, Zb, Zc, Zd, Ze, Zf, Zg and Zh

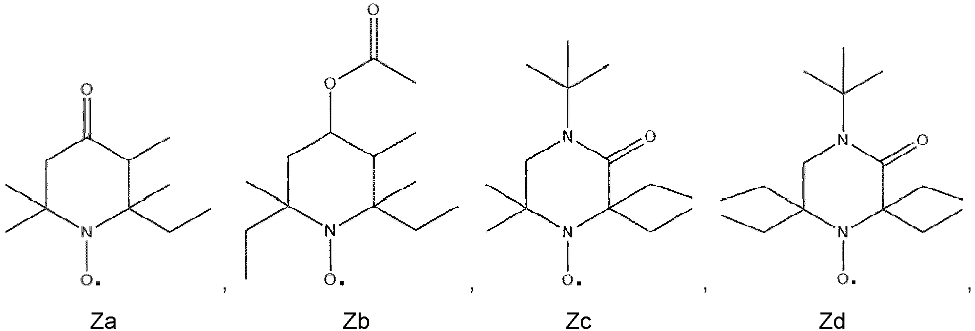

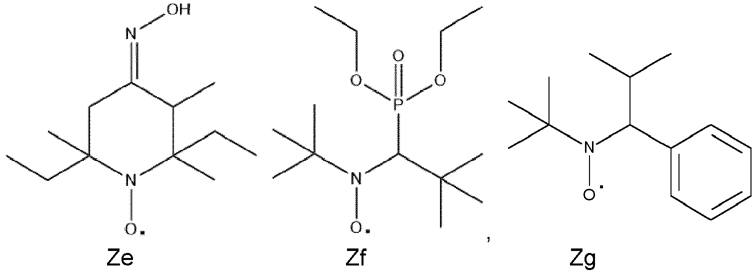

In a most preferred embodiment of the presently claimed invention, the at least one stable free nitroxyl radical is of the formula Zh or Ze:

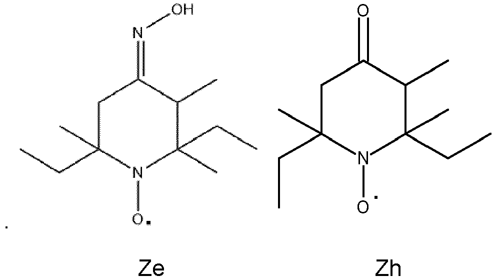

The block copolymers of the invention preferably have a number-average molecular weight Mₙ in the range from 1500 to 200 000 g/mol, more particularly 2000 to 100 000 g/mol. The weight-average molecular weight M_{w} of the block copolymers of the invention is situated typically in the range from 2500 to 30000 g/mol and more particularly in the range from 3000 to 10000 g/mol. The polydispersity, i.e., the ratio M_{w}/Mₙ, is situated typically in the range from 1 to 2 and more particularly in the range from 1.2 to 1.6.

Preferably, the block copolymer has ≤80 especially ≤60 and ≥5, especially ≤40 and ≥10 average repeating units in Block A, preferably entirely of the alkyl acrylate. Preferred are block copolymers with 15 to 60 average repeating units of the alkyl acrylate, which consist of more than 90 % by mol of n-butylacrylat. More preferred are block copolymers with 15 to 40 average repeating units of the alkyl acrylate, which consist of more than 90 % by mol of n-butylacrylat.

Preferred are block copolymers wherein the second block consists of ≤80 especially ≤70 and ≥5, especially ≥10 average monomer units in total. These monomer units are composed to an extent of at least 20 wt.%, more particularly at least 50 wt.%, especially at least 80 wt.%, or at least 90 wt.%, based on the total amount of the constituent monomers M of the second polymer block, or entirely, of monoethylenically unsaturated monomers with sulfonic acid groups.

In a preferred embodiment the molar ratio of the monomers of polymer block [A] to the monomer of polymer block [B] is 1 : 1 to 8 : 1 preferably is 1 : 1 to 6 : 1, especially 1 : 1 to 2.5 : 1. This equals the ratio of the number of the units. In an especially preferred embodiment the block copolymer has a first block of n-butyl acrylate units and a second block of styrene sulfonic acid and/or its salts units and the number of units of the first block (block A) and to the number of units of the second block (block B) is in the ratio of 1 : 1 to 8 : 1, preferably 1 : 1 to 2.5 : 1. One preferred method for providing the block copolymer of the present invention is that of controlled radical polymerization by the NMP method (nitroxide-mediated polymerization). Suitable nitroxylethers and nitroxyl radicals are principally known from US-A-4 581 429 or EP-A-621 878. Particularly useful are the open chain compounds described in WO 98/13392 (Akzo), WO 99/03894 (Ciba) and WO 00/07981 (Ciba), the piperidine derivatives described in WO 99/67298 (Ciba) and GB 2335190 (Ciba) or the heterocyclic compounds described in GB 2342649 (Ciba) and WO 96/24620 (Atochem). Further suitable nitroxylethers and nitroxyl radicals are described in WO 02/4805 (Ciba) and in WO 02/100831 (Ciba).

This method is known from the literature, as for example from P. Nesvadba, Chimia 60 (2006) 832-840 and literature [60] to [70] cited therein, and also from WO 98/44008, WO 00/07981, and WO 01/90113.

In the case of a controlled radical polymerization by the NMP method, the monomers to be polymerized are typically polymerized in the presence of a compound X-Z, i.e., a compound of the formula II 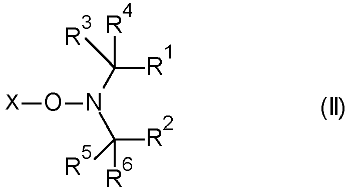 in which R¹, R², R³, R⁴, R⁵ and R⁶ have the definitions stated above for formula Z. In formula II,
- X: is selected from the group consisting of -CH₂-phenyl, -CHCH₃-phenyl, -C(CH₃)₂-phenyl,-C(C₅-C₆₋cycloalkyl)₂-CN, -C(CH₃)₂CN, -CH₂CH=CH₂, -CH₃CH-CH=CH₂, -(C₁-C₄alkyl)CR⁷-C(O)-phenyl, -(C₁-C₄)alkyl-CR⁷-C(O)-(C₁-C₄)alkoxy, -(C₁-C₄)alkyl-CR⁷-C(O)-(C₁-C₄)alkyl,-(C₁-C₄)alkyl-CR⁷-C(O)-N-di(C₁-C₄)alkyl, -(C₁-C₄)alkyl-CR⁷-C(O)-NH(C₁-C₄)alkyl, and -(C₁-C₄)alkyl-CR⁷-C(O)-NH₂, wherein
- R⁷: is hydrogen or (C₁-C₄)alkyl.

Preferably, in formula II, R¹ and R² together are linear C₂-C₁₀ alkylene, in which, optionally, a CH₂ group may have been replaced by O, C=O, or NR^{x}, this linear C₂-C₁₀ alkylene being unsubstituted or having 1, 2, 3, or 4 substituents from the group of C₁-C₄ alkyl, C₁-C₄ alkoxy, C₁-C₄ alkoxy-C₁-C₄ alkoxy, COOH, and CONH₂, and R^{x} is C₁-C₄ alkyl or C₁-C₄ alkoxy.

More particularly, in formula II, R¹ and R² together are linear C₂-C₄ alkylene and especially 1,3-propanediyl, in which, optionally, a CH₂ group may have been replaced by O, C(=O), or NR^{x}, and this linear C₂-C₄ alkylene or 1,3-propanediyl is unsubstituted or has 1, 2, 3, or 4 substituents from the group C₁-C₄ alkyl and C₁-C₄ alkoxy, and R^{x} is C₁-C₄ alkyl, especially methyl.

More particularly, in formula II, R³, R⁴, R⁵, and R⁶ independently of one another are methyl or ethyl.

Preferred radicals X are -CH(CH₃)-phenyl and -CH₂-phenyl.

For polymerization by the NMP method, the monomers to be polymerized will be polymerized in the presence of a nitroxyl radicals deriving from a compound of formula II.

The controlled free radical polymerization is advantageously initiated by radical initiators selected from the group consisting of organic peroxides and azo initiator. Suitable radical initiators of this type include 2,4-dimethyl-2,5-dibenzyl peroxyhexane, tert- butyl peroxybenzoate, di-tert-butyl diperoxyphthalate, methyl ethyl ketone peroxide, dicumyl peroxide, tert-butyl peroxycroto-nate, 2,2-bis-tert-butyl(peroxybutane), tertbutylperoxy isopropyl carbonate, 2,5-dimethyl-2,5-bis (benzoylperoxy)hexane, tert-butyl peracetate, 2,4-pentadiene peroxide, di-tert butyl peroxide, 2,5-dimethyl-2,5-di(tert-butylperoxy)hexyne, 2,5-dimethyl-2,5-di(tertbutylperoxy) hexane, preferably tert-butyl peroxy-2-ethyl hexanoate, tert-butyl peroxypivalate, tert-amyl peroxy-2- ethylhexanoate, azobisalkyl nitriles, such as azobisisobutylronitrile, and diaryl peroxides, such as dibenzoyl peroxide, and mixtures of the abovementioned compounds. Particularly suitable conventional free radical initiators to be used concomitantly are those having a half-life of about 1 hour at from 60 to 90° C.

The molar ratio of N-oxyl free radical to conventional free radical initiator should be from 0.5 to 5, preferably from 0.8 to 4.

Instead of starting from N-oxyl free radicals, it is also possible to start from the alkoxyamines of the formula II which decompose, for example, under the action of heat with formation of a stable N-oxyl free radical and of a free radical polymerization initiator. Furthermore, such N-oxyl free radicals can be produced in situ from suitable compounds having a NO function.

According a third embodiment the polymerization is started with a N-oxyl free radicals and a ni-troxylether, where appropriate in the presence of an organic peroxid or an azo initiator as radical initiator.

The sequential controlled free radical polymerization is carried out as a rule at elevated temperatures, advantageously at from 80 to 180° C, preferably from 100 to 175° C, in particular from 110 to 150° C. It may be carried out either in the absence of a solvent or in solution or by the free radical aqueous emulsion polymerization method.

The amount of compound of the formula II is typically in the range from 0.01 to 20 wt.% and more particularly in the range from 0.1 to 10 wt.-%, based on the monomers to be polymerized.

The polymerization temperature for the NMP method is typically in the range from 50 to 180°C and more particularly in the range from 80 to 150°C and may be determined by the skilled person by means of routine tests. The polymerization pressure is of minor importance and may be in the region of atmospheric pressure or slight subatmospheric pressure, e.g., > 800 mbar, or at superatmospheric pressure, e.g., up to 10 bar, and higher or lower pressures may likewise be employed. The polymerization time will in general not exceed 10 hours and is frequently in the range from 1 to 8 hours.

The block copolymers may be prepared in the reactors customary for a radical polymerization, examples being stirred tanks, more particularly those with close-clearance stirrers, including stirred tank cascades, and also tubular reactors, which may optionally have dynamic and/or static mixing elements. The reactors generally feature one or more devices for supply of the reactants and devices for removal of the products, and also, optionally, means for the supply and for the removal of the heat of reaction, and also, optionally, means for the control and/or monitoring of the reaction parameters of pressure, temperature, conversion, etc. The reactors can be operated batchwise or continuously.

The resulting block copolymer is preferably of the formula (III):

X-[A]ₐ-[B]_{b}-Z (III),

wherein
- [A]: is polymer block composed of alkyl acrylate, preferably n-butylacrylate, and
- a: is an integer which indicates the number of monomers units in the polymer block [A], a being 10 to 80, more preferably 10 to 40,
- [B]: is a homopolymer block or a copolymer block composed of an ethylenically unsaturated monomer with sulfonic acid groups, preferably sodium styrene sulfonic acid, and optional comonomers and
- b: is an integer which indicates the number of monomers units in the polymer block [B], b being 10 to 80, with the proviso that the molar ratio of polymer block [A] to polymer block [B] is 1 : 1 to 8 : 1,
- X: is selected from the group consisting of -CH₂-phenyl, -CHCH₃-phenyl, -C(CH₃)₂-phenyl,-C(C₅-C₆₋cycloalkyl)₂-CN, -C(CH₃)₂CN, -CH₂CH=CH₂, -CH₃CH-CH=CH₂, -(C₁-C₄alkyl)CR⁷-C(O)-phenyl, -(C₁-C₄)alkyl-CR⁷-C(O)-(C₁-C₄)alkoxy, -(C₁-C₄)alkyl-CR⁷-C(O)-(C₁-C₄)alkyl,-(C₁-C₄)alkyl-CR⁷-C(O)-N-di(C₁-C₄)alkyl, -(C₁-C₄)alkyl-CR⁷-C(O)-NH(C₁-C₄)alkyl, and -(C₁-C₄)alkyl-CR⁷-C(O)-NH₂, wherein
- R⁷: is hydrogen or (C₁-C₄)alkyl and
- Z: has the above-mentioned meaning.

According to the invention, the block copolymers described above are used as an aid for the preparation of aqueous polymer dispersions, which are characterized by a particularly pure water phase.

In accordance with the invention, a polymer dispersion is prepared by radically initiated aqueous emulsion polymerization of ethylenically unsaturated monomer in the presence of the above described block copolymer. Emulsion polymerizations are familiar to the expert and are produced, for example, in the form of an aqueous polymer dispersion by radically initiated aqueous emulsion polymerization of ethylenically unsaturated monomers. According to the invention, the radical-initiated aqueous emulsion polymerization is carried out in such a way that the ethylenically unsaturated monomers are dispersed in aqueous medium in the presence of the block copolymer and are radically polymerized as a rule by means of at least one water-soluble radical polymerization initiator. It appears that the block copolymer acts as a surface-active agent.

Preferably, a total of 0.1 to 10 parts by weight, in particular 0.25 to 5 parts by weight, especially 0.25 to 3 block parts by weight of the copolymer based on 100 parts by weight total monomers used in free radical emulsion polymerization, is used.

In principle, it is possible to add conventional emulsifiers in small quantities in addition to the polymerization with the block copolymer, for example those described in DE 102019217820 on pages 13 and 14. As a rule, this will not be desirable, since the main objective is to achieve a surfactant-free water phase.

The block copolymers according the present invention show good properties as emulsifiers. Therefore, they are in general useful for any kind of radically initiated aqueous emulsion polymerization of ethylenically unsaturated monomers. The method of the invention allows the preparation of a variety of polymer dispersions of different monomer compositions.

Monomers which are capable of free radical polymerization and are suitable for the novel process are in particular monoethylenically unsaturated monomers, such as
- olefins, e.g. ethylene,
- vinylaromatic monomers, such as styrene, a-methylstyrene, o-chlorostyrene or vinyltol-uenes,
- vinyl and vinylidene halides, such as vinyl and vinylidene chloride,
- esters of vinyl alcohol and monocarboxylic acids of 1 to 18 carbon atoms, such as vinyl acetate, vinyl propionate, vinyl n- butyrate, vinyl laurate and vinyl stearate,
- esters of α,β- monoethylenically unsaturated mono- and dicarboxylic acids of, preferably, 3 to 6 carbon atoms, in particular acrylic acid, methacrylic acid, maleic acid, fumaric acid and itaconic acid, with alkanols of, in general, 1 to 12, preferably 1 to 8, in particular 1 to 4, carbon atoms, in particular methyl, ethyl, n-butyl, iso-butyl and 2-ethylhexyl acrylate and methacrylate, dimethyl maleate or n-butyl maleate,
- nitriles of a,β-monoethylenically unsaturated carboxylic acids, such as acrylonitrile, and
- conjugated C₄-C₈-dienes, such as 1,3-butadiene and isoprene.

As a rule, the stated monomers are the main monomers which together usually account for more than 50% by weight, based on the total amount of the monomers to be polymerized by the free radical aqueous emulsion polymerization method according the invention.

Monomers which, when polymerized by themselves, would give homopolymers which have a high water solubility are usually copolymerized only as modifying monomers in amounts of less than 50, as a rule, from 0.5 to 20, preferably from 1 to 10, % by weight, based on the total amount of the monomers to be polymerized.

Examples of such monomers are α,β -monoethylenically unsaturated mono- and dicarboxylic acids of 3 to 6 carbon atoms and their amides, e.g. acrylic acid, methacrylic acid, maleic acid, fumaric acid, itaconic acid, acrylamide and methacrylamide and N-vinylpyrrolidone.

Further, α,β -monoethylenically unsaturated monomers bearing sulfonic acids and its water soluble salts, e .g. vinyl sulfonic acid, 2-Acrylamido-2-methylpropane sulfonic acid, 2-sulfoethyl methacrylate, sodium 4-styrenesulfonate, 3-sulfopropyl methacrylate and 3-sulfopropyl acrylate.

In addition, phosphate esters of polyethylene glycol mono(meth)acrylate and its water soluble salts where polyethylene glycol vary from 1 - 22 repeating units.

Monomers which usually increase the internal strength of the films of the aqueous polymer dispersion are as a rule likewise copolymerized only in minor amounts, in general from 0.5 to 10% by weight, based on the total amount of monomers to be polymerized. Usually, such monomers have an epoxy, hydroxyl, N-methylol or carbonyl group or at least two nonconjugated ethylenically unsaturated double bonds.

Examples of these are N-alkylolamides of α,β-monoethylenically unsaturated carboxylic acids of 3 to 10 carbon atoms and their esters with alcohols of 1 to 10 carbon atoms, among which N-methylolacrylamide and N-methylolmethacrylamide are very particularly preferred, silanized monomers, such as γ-methacryloyloxypropylsilane or vinyl trimethoxysilane, monomers having two vinyl radicals, monomers having two vinylidene radicals and monomers having two alkenyl radicals. The diesters of dihydric alcohols with α,β- monoethylenically unsaturated monocarboxylic acids are particularly suitable, among which acrylic and methacrylic acid are once again preferably used. Examples of such monomers having two nonconjugated ethylenically unsaturated double bonds are alkylene glycol diacrylates and dimethacrylates, such as ethylene glycol diacrylate, 1,3- butylene glycol diacrylate, 1,4-butylene glycol diacrylate and propylene glycol diacrylate, divinylbenzene, vinyl methacrylate, vinyl acrylate, allyl methacrylate, allyl acrylate, diallyl maleate, diallyl fumarate, methylenebisacrylamide, cyclopentadienyl acrylate or triallyl cy-anurate. Also of particular importance in this context are the hydroxy-C₁-C₈-alkyl esters of methacrylic and so acrylic acid, such as hydroxyethyl, hydroxy-n-propyl or hydroxy-n-butyl acrylate and methacrylate, and compounds such as diacetoneacrylamide and acetyl acetoxyethyl acrylate and methacrylate.

In particular, monomer mixtures which can be subjected to free radical aqueous emulsion polymerization by the novel process in a controlled manner to give aqueous polymer dispersions are those which are composed of
- from 70 to 100% by weight of esters of acrylic and/or methacrylic acid with alkanols of 1 to 12 carbon atoms and optional styrene or
- from 70 to 100% by weight of styrene and butadiene or
- from 70 to 100% by weight of vinyl chloride and/or vinylidene chloride or
- from 40 to 100% by weight of vinyl acetate and/or vinyl propionate and optional ethylene.

Preferred is the process for preparing aqueous dispersions of polymers, the polymer consists in copolymerized form of
- from 70 to 99% by weight of at least one ester of acrylic and/or methacrylic acid with alkanols of 1 to 12 carbon atoms, styrene and their mixtures, preferably of at least one ester of acrylic and/or methacrylic acid with alkanols of 1 to 8 carbon atoms, (monomers I)
- from 1 to 10 % by weight of at least one monoethylenically unsaturated C₃-C₈-carboxylic acid, methacrylic and their amides (monomers II), preferably acrylic acid, methacrylic acid, acryl amide and methacrylic amide,
- from ≥0 to 25% by weight of monoethylenically unsaturated monomers (monomer III) which is different from monomers I and monomers II,
the amount of the monomers I, II and if present III adding up to 100 wt%.

The free-radically initiated aqueous emulsion polymerization is triggered by means of a free-radical polymerization initiator (free-radical initiator). These may in principle be peroxides or azo compounds. Of course, redox initiator systems are also useful. Peroxides used may, in principle, be inorganic peroxides, such as hydrogen peroxide or peroxodisulfates, such as the mono- or di-alkali metal or ammonium salts of peroxodisulfuric acid, for example the mono- and disodium, -potassium or ammonium salts, or organic peroxides such as alkyl hydroperoxides, for example tert-butyl hydroperoxide, p-menthyl hydroperoxide or cumyl hydroperoxide, and also dialkyl or diaryl peroxides, such as di-tert-butyl or di-cumyl peroxide. Azo compounds used are essentially 2,2'-azobis(isobutyronitrile), 2,2'-azobis(2,4-dimethylvaleronitrile) and 2,2' azobis(amidinopropyl) dihydrochloride (AlBA, corresponds to V-50 from Wako Chemicals). Suitable oxidizing agents for redox initiator systems are essentially the peroxides specified above. Corresponding reducing agents which may be used are sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, such as iron(II) sulfate, iron(II) ammonium sulfate, iron(II) phosphate, ene diols, such as dihydroxymaleic acid, benzoin and/or ascorbic acid, and reducing saccharides, such as sorbose, glucose, fructose and/or dihydroxyacetone.

Preferred free-radical initiators are inorganic peroxides, especially peroxodisulfates, and redox initiator systems.

In general, the amount of the free-radical initiator used, based on the total amount of monomers M, is 0.01 to 2 pphm, preferably 0.1 to 1 pphm.

The amount of free-radical initiator required in the process of the invention for the emulsion polymerization monomers M can be initially charged in the polymerization vessel completely. However, it is also possible to charge none of or merely a portion of the free-radical initiator, for example not more than 30% by weight, especially not more than 20% by weight, based on the total amount of the free-radical initiator required in the aqueous polymerization medium and then, under polymerization conditions, during the free-radical emulsion polymerization of the monomers M to add the entire amount or any remaining residual amount, according to the consumption, batchwise in one or more portions or continuously with constant or varying flow rates.

The free-radical aqueous emulsion polymerization of the invention is usually conducted at temperatures in the range from 0 to 170 °C. Temperatures employed are frequently in the range from 50 to 120 °C, in particular in the range from 60 to 120 °C and especially in the range from 70 to 110 °C.

The free-radical aqueous emulsion polymerization of the invention can be conducted at a pressure of less than, equal to or greater than 1 atm (atmospheric pressure), and so the polymerization temperature may exceed 100 °C and may be up to 170 °C. Polymerization of the monomers is normally performed at ambient pressure but it may also be performed under elevated pressure. In this case, the pressure may assume values of 1.2, 1.5, 2, 5, 10, 15 bar (absolute) or even higher values. If emulsion polymerizations are conducted under reduced pressure, pressures of 950 mbar, frequently of 900 mbar and often 850 mbar (absolute) are established. Advantageously, the free-radical aqueous emulsion polymerization of the invention is conducted at ambient pressure (about 1 atm) with exclusion of oxygen, for example under an inert gas atmosphere, for example under nitrogen or argon.

Emulsion polymerization can be carried out either as a batch process or preferably in the form of a feed process, including step or gradient processes. In that case it is possible for the monomers that are to be polymerized to be added continuously, including by a staged or gradient procedure, to the polymerization batch. Preference is given to a feed process - for examples with feed times wherein, the monomers, preferably in aqueous emulsion form, are metered into the reaction batch over the course of 1 to 4 hours, preferably within from 1.5 to 3 hours.

According to one preferred embodiment at least 10 %, preferably 50 %, especially 90 % by weight of the block copolymer is mixed with water in a reaction vessel before the start of the feed of monomers. The residual block copolymer can be added continuously or stepwise during the feed of the monomers.

Besides the seed-free preparation mode, it is possible, in order to adjust the polymer particle size, for the emulsion polymerization to take place in the presence of a polymer seed, as for example in the presence of 0.01 to 10 wt%, frequently of 0.05 to 7.0 wt%, and often of 0.1 to 4.0 wt% of a polymer seed, based in each case on the total monomer amount.

According to one preferred embodiment the polymerization can take place in the presence of an exogenous polymer seed. An exogenous polymer seed is understood to be a polymer seed which has been prepared in a separate reaction step and has a monomeric composition differing from that of the polymer prepared by the radically initiated aqueous emulsion polymerization, although this means nothing more than that different monomers, or monomer mixtures having a differing composition, are used for preparing the exogenous polymer seed and for preparing the aqueous polymer dispersion.

According to another preferred embodiment the polymerization can take place in the presence of a seed latex prepared in situ. Processes for this are known and can be found in the prior art (see EP-B 40 419 and also 'Encyclopedia of Polymer Science and Technology', vol. 5, John Wiley & Sons Inc., New York, 1966, p. 847). An in-situ polymer seed is understood to be a polymer seed which has been prepared in-situ with the same monomeric composition as that of the polymer prepared by the radically initiated aqueous emulsion polymerization.

Preparing an exogenous polymer seed or an in-situ seed are both familiar to the skilled person and are customarily accomplished by initially charging a reaction vessel with a relatively small amount of monomers and also with a relatively large amount of stabilizer, and adding a sufficient amount of polymerization initiator at reaction temperature.

As a rule the exogenous polymer seed particles have a weight-average diameter Dw ≤ 100 nm, frequently ≥ 5 nm to ≤ 50 nm, and often ≥ 15 nm to ≤ 35 nm. The weight-average particle diameters Dw are generally determined according to ISO 13321 using a High Performance Particle Sizer from Malvern, at 22°C and a wavelength of 633 nm. Especially preferred is a polystyrene or polymethyl methacrylate polymer seed.

Accordingly, the prior art advises, in the feed process, including a defined, finely divided seed polymer dispersion in the initial charge to the polymerization vessel, and then polymerizing the monomers in the presence of the seed. In this case, the seed polymer particles act as `polymerization nuclei', and decouple polymer particle formation from polymer particle growth.

In addition to monomers having unsaturated double bonds, molecular weight regulators, such as tert-dodecyl mercaptan and 3-mercaptopropyltrimethoxysilane, may be copolymerized in minor amounts, usually in an amount of from 0.01 to 2% by weight, based on the monomers to be polymerized. Such substances are preferably added to the polymerization zone as a mixture with the monomers to be polymerized.

It is frequently advantageous when the aqueous polymer dispersion obtained on completion of polymerization of the monomers M is subjected to a post-treatment to reduce the residual monomer content. This post-treatment is effected either chemically, for example by completing the polymerization reaction using a more effective free-radical initiator system (known as post-polymerization), and/or physically, for example by stripping the aqueous polymer dispersion with steam or inert gas. Corresponding chemical and physical methods are familiar to those skilled in the art, for example from EP 771328 A, DE 19624299 A, DE 19621027 A, DE 19741184 A, DE 19741187 A, DE 19805122 A, DE 19828183 A, DE 19839199 A, DE 19840586 A and DE 19847115 A. The combination of chemical and physical post-treatment has the advantage that it removes not only the unconverted ethylenically unsaturated monomers but also other disruptive volatile organic constituents (VOCs) from the aqueous polymer dispersion.

The polymer solids content can be adjusted to a desired value by dilution or concentration.

The polymer dispersions obtained according the present invention can also be supplemented with the usual auxiliary materials and additives. These include, for example, substances that adjust the pH value, reducing and bleaching agents, such as the alkali metal salts of hy-droxymethanesulfinic acid (e.g. Rongalit^{®} C from BASF SE), complexing agents, deodorants, odorants and viscosity modifiers, such as alcohols, e.g. glycerine, methanol, ethanol, tert-butanol, glycol, etc. These auxiliaries and additives can be added to the polymer dispersions in the receiver, one of the inlets or after completion of the polymerization. Furthermore, other common additives such as bactericidal, foam or viscosity modifying additives can be added to the aqueous polymer dispersion.

The process according the present invention leads to new aqueous polymeric dispersions. These dispersions are stable even in an acidic pH <2. Further the aqueous dispersions have a high surface tension, as a rule above 45 mN/m, preferably in the range from 50 - 65 mN/m. The process leads to dispersion with a surface tension of the aqueous phase in the range from 45 to 60 mN/m without any purification steps, like membrane processes, which destabilizes the dispersions.

The polymer dispersions obtainable by the process of the invention have beneficial film forming properties. Films formed with the inventive dispersions show very good water resistance. They show very low water uptake. Further the films show very low leaching.

These and other objects are achieved by the inventive block copolymer which has a first block comprising at least 80 wt.-% units of alkyl acrylate and a second block comprising units of an ethylenically unsaturated monomer with sulfonic acid groups whereas either the first or the second block has a terminal group which is a nitroxyl radical.

Preferred is a block copolymer of the formula III that are described below. The invention accordingly provides a block copolymer of the general formula III:

X-[A]ₐ-[B]_{b}-Z (III),

wherein
- [A]: is polymer block composed of alkyl acrylate, preferably n-butylacrylate, and
- a: is an integer which indicates the number of monomers units in the polymer block [A], a being 5 to 80, preferably 10 to 60, more preferably 10 to 40;
- [B]: is a homopolymer block or a copolymer block composed of an ethylenically unsaturated monomer with sulfonic acid groups, preferably sodium styrene sulfonic acid, and optional comonomers and
- b: is an integer which indicates the number of monomers units in the polymer block [B], b being 5 to 80, preferably 10 to 70, with the proviso that the molar ratio of the monomer of the first block to the monomer of the second block is 1 : 1 to 8 : 1,
- X: is selected from the group consisting of -CH₂-phenyl, -CHCH₃-phenyl, -C(CH₃)₂-phenyl,-C(C₅-C₆₋cycloalkyl)₂-CN, -C(CH₃)₂CN, -CH₂CH=CH₂, -CH₃CH-CH=CH₂, -(C₁-C₄alkyl)CR⁷-C(O)-phenyl, -(C₁-C₄)alkyl-CR⁷-C(O)-(C₁-C₄)alkoxy, -(C₁-C₄)alkyl-CR⁷-C(O)-(C₁-C₄)alkyl,-(C₁-C₄)alkyl-CR⁷-C(O)-N-di(C₁-C₄)alkyl, -(C₁-C₄)alkyl-CR⁷-C(O)-NH(C₁-C₄)alkyl, and -(C₁-C₄)alkyl-CR⁷-C(O)-NH₂, wherein
- R⁷: is hydrogen or (C₁-C₄)alkyl and
- Z: has the above-mentioned meaning.

Preferred are block copolymers with terminal group of formula Z' 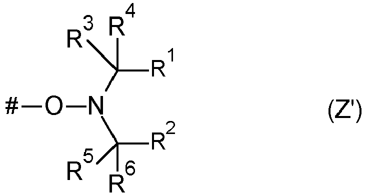 in which R¹ and R² together are linear C₂-C₄ alkylene and especially are 1,3-propanediyl, in which optionally one or two CH₂ groups may have been replaced by O, C(=O), or NR^{x}, where linear C₂-C₄ alkylene or 1,3-propanediyl is unsubstituted or has 1, 2, 3, or 4 substituents from the group of C₁-C₄ alkyl and C₁-C₄ alkoxy, and R^{x} is C₁-C₄ alkyl, especially methyl.

Further preferred are block copolymers, which have a nitroxyl radical selected from the group of radical with the formulas Za, Zb, Zc, Zd, Ze, Zf, Zg and Zh and especially Ze or Zh.

Further preferred are block copolymers in which the monomer with sulfonic acid groups is selected from the group consisting of styrene sulfonic acid, alkali salts of styrene sulfonic acid and ammonium salts of styrene sulfonic acid and in which the molar ratio of the monomers of the first block to the monomers of the second block is 1 : 1 to 8 : 1.

The block copolymers according the present invention can be used as emulsifying agent for free radical emulsion polymerization. They can be used over a wide pH range in emulsion polymerization processes. Furthermore, they stabilize aqueous polymeric dispersions, especially in the acidic pH range.

The invention is to be elucidated by nonlimiting examples which follow.

### Examples

Unless the context suggests otherwise, percentages are always by weight. A reported content is based on the content in aqueous solution or dispersion if not stated otherwise.

### Abbreviations:

- GPC:: gel permeation chromatography
- Mn:: Number average molecular weight
- PDI:: Polydispersity (The polydispersity of a sample is defined as weight average molecular weight Mw divided by Mn and gives an indication just how narrow a distribution is.)
- nBA:: n-butyl acrylate
- BcP:: block copolymer
- NaSS:: sodium styrene sulfonate
- HEMA:: hydroxyethyl methacrylate
- MAA:: methacrylic acid
- HEA:: 2-hydroxyethyl acrylate
- MPEG350MA:: Bisomer MPEG 350MA
- MPEG550MA:: Bisomer MPEG 550MA
- DMF:: N,N-dimethylformamide
- S:: Styrene
- AA:: acrylic acid

The following quantities in pphm (parts per hundred monomer) are based on 100 weight stake of total monomer.

The abbreviated names better reflect which part of the polymer is random and which part is a block. For example the name poly(nBA -b-NaSS co HEMA) given in Example 2.11 describes a polymer comprising a block (characterized by the letter "b") of poly sodium styrene sulfonate wherein the styrene group has at random been copolymerized with hydroxyethyl methacrylate and another block of pure poly- n-butylacrylate. The approximated numbers of the monomers in said blocks are given e.g. in Example 2.11 as 20-b-(4-co-6), i.e. there are approximately 6 hydroxyethyl methacrylate units randomly copolymerized with 4 sodium styrene sulfonate units onto a preformed block of 20 n-butyl acylate units. It should, however, be noted that the abbreviated names do not mention the end groups on both sides of the polymer, i.e. e.g. the 1-phenyl-ethyl group.

The solids contents were determined generally by drying an aliquot (about 2 g) of the aqueous polymer dispersion to constant weight at 150°C. Two separate measurements were carried out in each case. The figure reported in each of the examples represents the average of the two results.

### Preparation of the amphiphilic block copolymer

The production process of the amphiphilic block copolymers described below with A as initiator was carried out with 2,6-diethyl-2,3,6-trimethyl-1-(1-phenylethoxy)- 4-piperidinone (hereinafter referred to as alkoxyamine A) as polymerization initiator.

### Synthesis of a linear polybutyl acrylate (BA)

### Example 1.1: A-Block 1.1

Under nitrogen atmosphere 225 g of alkoxyamine A (0.71 mol) was dissolved in 4088 g n-butyl acrylate (31.9 mol). The mixture was degassed three times. Following which, it was heated to 115°C and stirred at that temperature until desired monomer conversion was reached. Conversion was determined by solid content measurement according to ISO 3251. As soon as the targeted monomer conversion of n-butyl acrylate was obtained vacuum was applied and residual monomer was removed by vacuum distillation at 100 °C and 15 mbar. The solid content was >98%.

### Examples 1.2 to 1.6: Preparation of A-Block 1.2 to block 1.6

The A-Block 1.2 to 1.7 were made identical to the procedure of example 1.1 but using the respective amounts of alkoxyamine A and n-butyl acrylate given in table 1. The characteristics of the resulting A-Block copolymers 1.1 to 1.7 are given in table 2. The solid content of products was >98%.

### Example 1.7: A-Block 1.7 (not according the invention)

Under nitrogen atmosphere 25 g of alkoxyamine A was dissolved in 412 g (3.96 mol) styrene. The mixture was degassed three times. Following which, it was heated to 115°C and stirred at that temperature until desired monomer conversion was reached. Conversion was determined by solid content measurement in analogy to ISO 3251. As soon as a monomer conversion of 40 % styrene was obtained, vacuum was applied and residual monomer was removed by vacuum distillation at 110 °C and 5 mbar. The solid content was >98 %. The polymer A-Block has 20 average repeating units.

**Table 1: A-Block preparation**

| Example | A-Block | Alkoxyamine A [g] / [mol] | nBA [g] / [mol] | Conversion [%] | Average repeating units |
|---|---|---|---|---|---|
| 1.1 | 1.1 | 225/0.71 | 4088/31.9 | 44 | 20 |
| 1.2 | 1.2 | 166/0.52 | 4021 / 31.37 | 50 | 30 |
| 1.3 | 1.3 | 163/0.51 | 3296 / 25.72 | 40 | 20 |
| 1.4 | 1.4 | 4/0.0126 | 246/1.92 | 49 | 75 |
| 1.5 | 1.5 | 80 / 0.25 | 3230 / 25.20 | 50 | 50 |
| 1.6 | 1.6 | 80 / 0.25 | 3230 / 25.20 | 35 | 35 |

| | | | | | |
|---|---|---|---|---|---|
| nBA = n-butyl acrylate alkoxyamine A = 2,6-diethyl-2,3,6-trimethyl-1-(1-phenylethoxy)- 4-piperidinone | | | | | |

### Example 2.1: Synthesis of a linear block copolymer poly(n-BA-b-NaSS)

Under nitrogen atmosphere 267 g sodium styrene sulfonate were dissolved in 3551 g N,N-dimethyl formamide (7 % by weight NaSS) and 350 g of A-Block 1.1 was added The mixture was heated to 115 °C and stirred at that temperature until desired monomer conversion was reached. Conversion was determined by NMR measurement. As soon as full monomer conversion was obtained vacuum was applied and solvent removed by vacuum distillation at 155 °C and 5 mbar. The solid content was >99 %.

### Examples 2.2 to 2.10 and 2.18 to 2.25

The AB-Block polymer was made identical to the procedure of example 2.1. The A-Block polymer was added to a 7 % by weight solution of NaSS in DMF. The amounts of the A-Block polymer and the NaSS are given in table 3. The solid content of the products was >99%. Characteristics of the products are summarized in table 4.

**Table 2: Monomer compositions of the B-Block preparation**

| Example No. = AB Block No. | A-Block | A-Block [g] | A-Block [mol] | NaSS [g] / [mol] | Average repeating units A-Block | Average repeating units B-Block |
|---|---|---|---|---|---|---|
| 2.1 | 1.1 | 350 | 0.117 | 267 / 1.29 | 20 | 10 |
| 2.2 | 1.3 | 400 | 0.133 | 305 / 1.48 | 20 | 10 |
| 2.3 | 1.2 | 40 | 0.010 | 33/0.16 | 30 | 15 |
| 2.4 | 1.2 | 50 | 0.013 | 28/0.14 | 30 | 10 |
| 2.5 | 1.2 | 30 | 0.008 | 33/0.16 | 30 | 20 |
| 2.6 | 1.4 | 20 | 0.0002 | 17/0.08 | 75 | 38 |
| 2.7 | 1.4 | 30 | 0.0003 | 14/0.07 | 75 | 30 |
| 2.8 | 1.4 | 22 | 0.0002 | 13 / 0.06 | 75 | 25 |
| 2.9 | 1.4 | 12 | 0.0001 | 12/0.06 | 75 | 45 |
| 2.10 | 1.1 | 20 | 0.007 | 12/0.06 | 20 | 8 |
| 2.18 | 1.5 | 12 | 0.002 | 16/0.06 | 50 | 38 |
| 2.19 | 1.5 | 15 | 0.002 | 13 / 0.06 | 50 | 25 |
| 2.20 | 1.6 | 20 | 0.004 | 14/0.07 | 35 | 15 |
| 2.21 | 1.5 | 15 | 0.002 | 10/0.05 | 50 | 20 |
| 2.22 | 1.5 | 8 | 0.001 | 13 / 0.06 | 50 | 45 |
| 2.23 | 1.5 | 7 | 0.001 | 14/0.07 | 50 | 60 |
| 2.24 | 1.6 | 10 | 0.002 | 18/0.09 | 35 | 30 |
| 2.25 n.i. | 1.7 n.i. | 16 | 0.007 | 14/0.07 | 20 | 10 |

| | | | | | | |
|---|---|---|---|---|---|---|
| n.i. not according the invention - comparative | | | | | | |

### Synthesis of a linear block copolymer poly(n-BA-b-NaSS-co-HEMA) Example 2.11

Under nitrogen atmosphere 9.2 g sodium styrene sulfonate were dissolved in 122 g N,N-dimethyl formamide (7 % by weight NaSS) and 8 g 2-Hydroxyethyl methacrylate followed by 30 g of A-Block 1.1 was added The mixture was heated to 115 °C and stirred at that temperature until desired monomer conversion was reached. Conversion was determined by NMR measurement. As soon as full monomer conversion was obtained vacuum was applied and solvent removed by vacuum distillation at 155 °C and 5 mbar. The solid content was >99%.

### Example 2.12 to 2.17

The AB-Block polymer was made identical to the procedure of example 2.11. The A-Block polymer and the comonomer were added to a 7 % by weight solution of NaSS in DMF. The amounts of the comonomer and the NaSS are given in table 3. The solid contents of the products were >99 %.

**Table 3: Monomer compositions of the B-Block preparation**

| AB-Block Example | monomer [g] / [mol] | | | | | | Average repeating units | | |
|---|---|---|---|---|---|---|---|---|---|
| | NaSS | HEMA | MAA | HEA | MPEG 350MA | MPEG 550MA | A-Block | NaSS | B-comonomer |
| 2.11 | 9.2 / 0.04 | 8 / 0.06 | - | - | - | - | 20 | 4 | 6 |
| 2.12 | 9.2 / 0.04 | 13 / 0.10 | - | - | - | - | 20 | 4 | 10 |
| 2.13 | 9.2 / 0.04 | 20 / 0.15 | - | - | - | - | 20 | 4 | 15 |
| 2.14 | 9.2 / 0.04 | - | 5 / 0.06 | - | - | - | 20 | 4 | 6 |
| 2.15 | 9.2 / 0.04 | - | - | 7 / 0.06 | - | - | 20 | 4 | 6 |
| 2.16 | 9.2 / 0.04 | - | - | - | 26 / 0.06 | - | 20 | 4 | 6 |
| 2.17 | 9.2 / 0.04 | - | - | - | - | 38 / 0.06 | 20 | 4 | 6 |

Comparative Example 2.26: Synthesis of a linear block copolymer poly(n-BA-b-MAA) 20-b-11 Under nitrogen atmosphere 600 g A-Block 1.1 was dissolved in 298 g (3.46 mol) methacrylic acid, 300 g ethanol and 30 g water. The mixture was heated to 145 °C under pressure and stirred at that temperature until an average monomer conversion of 11 repeating units was reached.

Conversion was determined by NMR measurement. Afterwards, the pressure was released, vacuum applied and processing solvents as well as residual methacrylic acid were removed by vacuum distillation at 155 °C and 5 mbar. The solid content was >99 %.

### Analytics of the polymer dispersions:

### Determination of particle sizes

The distribution of particle size is determined by quasi-elastic light scattering (QELS), also known as dynamic light scattering (DLS) according to ISO 13321 :1996 standard. The determination was carried out using a High-Performance Particle Sizer (Malvern) at 22 °C and a wavelength of 633 nm. For this purpose, a sample of the aqueous polymer dispersion is diluted, and the dilution will be analyzed. In the context of DLS, the aqueous dilution may have a polymer concentration in the range from 0.001 to 0.5 % by weight, depending on the particle size. For most purposes, a proper concentration will be 0.01 % by weight.

The reported particle size value D is the z-average (Dz) of the cumulant evaluation of the measured of the measured autocorrelation function.

### Determination of pH

For pH measurement a pH electrode (SI Analytics H63) was used. The measurement was performed at room temperature with original sample.

### Determination of solids content

The solids content was determined by drying the sample and measuring its dry weight. Therefore, a solids content device Sartorius MA 45 was used with constant weight program is used. A sample of 1.5 g prepared in a tared small aluminum pan with glass fiber pad and covered with a cap. The drying program "120 °C Automatic" is started. The glass fiber pad is pre-dried with the same program. Every sample solids content is calculated by a double determination.

### Determination of surface tension

Surface Tension is measured by a Du-Noüy Ring tensiometer K100c from FA Krüss. For this purpose, 35 ml of the dispersion are filled undiluted into an open glass vessel. This is clamped in a double-walled container thermostatically controlled at 25 °C. The platinum ring (d = 19.09 mm) is locked in place on the force transducer.

The measurement is performed fully automatically: Liquid is moved up to the platinum ring from below at 100 mm/min until it is immersed 3 mm into the liquid. The liquid is then moved at 6 mm/min in the opposite direction so that the ring slowly moves towards the air/water interface. When the ring reaches the liquid/air interface, the liquid is stretched and the force as a function of the travel is recorded. Surface tension is calculated from of the maximum force. This process is repeated three times in total. The surface tensions specified in the tables are the arithmetically averaged values of three successive individual measurements. The higher the surface tension of the aqueous dispersion, the purer the aqueous phase. The theoretical maximum value of the surface tension would be the value of pure water, which is 73 mN/m at 20 °C and 1 atm.

### Determination of maximum shear stability

Shear tests are performed under turbulent flow conditions using a dispermat (VMA Getzmann) dissolver system. This consists of a high-speed rotor that transfers its rotational energy to a 20 mm serrated disk with 16 cogs. Undiluted dispersion is sheared for 10 minutes at 2500 rpm, 5000 rpm, 7500 rpm and 10000 rpm. The maximum shear stability is given at the speed of rotation at which the dispersion does not form coagulate, unchanged from the starting point. The higher the value of the maximum shear stability, the more shear force can be applied until the solution coagulates.

### Determination of NaCl and CaCl₂ stability

A small aliquot of dispersion is dropped into several salt solutions with different concentrations of 0.1 %, 0.5 %, 1 % and 5 % by weight calcium chloride and 2.5 %, 5 %, 10 % by weight sodium chloride. The maximum salt stability is given in a salt concentration where the droplet does show still a homogeneous dilution instead of coagulation.

Salt stability: The emulsifying effect is all the better, the more stable the dispersion is even at high salt concentrations. A stability at 2.5 % is therefore better than one at 1 %.

### Preparation of the polymer dispersions D1 - D4

| | |
|---|---|
| Initiator feed: | 42.7 g of a 7 wt% strength aqueous solution of sodium peroxodisulphate |
| Monomer feed: | 232 g nBA (58 wt%) |
| | 168 g MMA (42 wt%) |
| Block copolymer feed: | 304.6 g of a 2.63 wt% strength aqueous solution of the block copolymer according to table 4 (2 pphm) |

In a 2 L reactor with anchor stirrer, 270.40 g deionised water were filled under a nitrogen atmosphere and heated up. After reaching an internal temperature of 85 °C, 12.8 g of initiator feed, 20 g monomer feed and 45.7 g block copolymer feed were added within 2 minutes and stirred for 10 minutes.

Then beginning simultaneously and with maintenance of the internal temperature of 85 °C, 29.9 g initiator feed, 380 g monomer feed and 258.9 g block copolymer feed were added over 180 minutes with a constant flow rate. Thereafter the reaction mixture was stirred for another 30 minutes at 85°C. Then 7.63 g acetone bisulfite and 6 g tert-butyl hydroperoxide were added over the course of 60 minutes. The dispersion was then cooled to room temperature. This gave a polymer dispersion having a solids content of 39 wt%. The dispersion had no coagulum.

**Table 4: Dispersion 1-4 (nBA/MMA ratio: 58/42 wt %/wt %)**

| Dispersion | AB Block No | A / B | D [nm] | pH | Surface tension [mN/m] | Max Shear stability [rpm] | Max NaCl stability [%] | Max CaCl₂ stability [%] |
|---|---|---|---|---|---|---|---|---|
| D1 | 2.1 | 20/10 | 146 | 2.1 | 52 | 7500 | 2.5 | 0.1 |
| D2 | 2.19 | 50/25 | 211 | 2.0 | 57 | 5000 | 2.5 | 0.1 |
| D3 | 2.18 | 50/38 | 211 | 2.1 | 60 | 2500 | 2.5 | 0.1 |
| D4 | 2.6 | 75/38 | 260 | 2.0 | 58 | <2500 | < 2.5 | 0.1 |

| | | | | | | | | |
|---|---|---|---|---|---|---|---|---|
| D: Average particle size | | | | | | | | |

### Preparation of the polymer dispersions D5 - D8

| | |
|---|---|
| Initiator feed: | 42.7 g of a 7 wt% strength aqueous solution of sodium peroxodisulphate |
| Monomer feed: | 232 g nBA (58 wt%) |
| | 168 g MMA (42 wt%) |
| Water feed: | 296.61 g |

In a 2 L reactor with anchor stirrer, 270.04 g deionised water and 278.4 g of a 2.87 wt% aqueous solution of the block copolymer (2pphm) according table 5 were filled under a nitrogen atmosphere and heated up. After reaching an internal temperature of 85 °C, 12.8 g of initiator feed were added within 2 minutes and stirred for 5 minutes. Then beginning simultaneously and with maintenance of the internal temperature of 85 °C, 29.9 initiator feed, 400 g monomer feed and water feed were added over 180 minutes with a constant flow rate. Thereafter the reaction mixture was stirred for another 30 minutes at 85 °C. Then 7.63 g acetone bisulfite and 6 g tert-butyl hydroperoxide were added over the course of 60 minutes. The dispersion was then cooled to room temperature. This gave a polymer dispersion having a solids content of 39 wt%. The dispersion had no coagulum.

**Table 5: Dispersion D5 - D8 (nBA/MMA ratio in wt %: 58/42)**

| Dispersion | AB Block No | A / B | D [nm] | pH | Surface tension [mN/m] | Max Shear stability [rpm] | Max NaCl stability [%] | Max CaCl₂ stability [%] |
|---|---|---|---|---|---|---|---|---|
| D5 | 2.1 | 20/10 | 97 | 1.9 | 52 | 7500 | < 2.5 | 0.1 |
| D6 | 2.19 | 50/25 | 190 | 1.9 | 52 | 5000 | < 2.5 | 0.1 |
| D7 | 2.18 | 50/38 | 199 | 1.8 | 52 | <2500 | < 2.5 | 0.1 |
| D8 | 2.6 | 75/38 | 237 | 1.9 | 53 | <2500 | < 2.5 | 0.1 |

| | | | | | | | | |
|---|---|---|---|---|---|---|---|---|
| D: Average particle size | | | | | | | | |

### Preparation of the polymer dispersions D9-D12

According to the procedure described for the Dispersion D5, further dispersions D9-D12 with the block copolymer 2.1 were prepared, wherein the amount of block copolymer used was varied as follows:
D9: 296.61 g of a 6.75 wt% strength aqueous solution
D10: 296.61 g of a 1.35 wt% strength aqueous solution
D11: 296.61 g of a 0.34 wt% strength aqueous solution
D12: 296.61 g of a 0.20 wt% strength aqueous solution

**Table 6: Dispersion D9 - D12**

| Dispersion | AB Block No | A / B | Amount BcP pphm | D [nm] | pH | Surface tension [mN/m] | Max Shear stability [rpm] | Max NaCl stability [%] | Max CaCl₂ stability [%] |
|---|---|---|---|---|---|---|---|---|---|
| D5 | 2.1 | 20/10 | 2 | 97 | 1.9 | 52 | 7500 | < 2.5 | 0.1 |
| D9 | 2.1 | 20/10 | 5 | 79 | 1.7 | 51 | 10000 | 2.5 | 0.1 |
| D10 | 2.1 | 20/10 | 1 | 96 | 1.7 | 51 | 5000 | <2.5 | 0.1 |
| D11 | 2.1 | 20/10 | 0.25 | 125 | 1.7 | 50 | 2500 | <2.5 | 0.1 |
| D12 | 2.1 | 20/10 | 0.15 | 143 | 1.7 | 51 | <2500 | <2.5 | 0.1 |

| | | | | | | | | | |
|---|---|---|---|---|---|---|---|---|---|
| D: Average particle size | | | | | | | | | |

### Preparation of the polymer dispersions D13-D14

According to the procedure described for the Dispersion D5, further dispersions D13 and D14 with the block copolymer 2.1 were prepared, wherein the monomer feed was changed by replacing 1 pphm of butyl acrylate by acrylic acid:

| | |
|---|---|
| Monomer feed: | 228 g nBA (57 wt%) |
| | 168 g MMA (42 wt%) |
| | 4 g AA (1 wt%) |

**Table 7: Dispersion D13 - D14**

| Dispersion | AB Block No | Amount BcP pphm | D [nm] | pH | Surface tension [mN/m] | Max Shear stability [rpm] | Max NaCl stability [%] | Max CaCl₂ stability [%] |
|---|---|---|---|---|---|---|---|---|
| D13 | 2.1 | 1 | 120 | 1.7 | 50 | 5000 | <2.5 | 0.1 |
| D14 | 2.1 | 1 | 115 | 8.6 | 46 | 10000 | 5 | 0.1 |

| | | | | | | | | |
|---|---|---|---|---|---|---|---|---|
| D: Average particle size | | | | | | | | |

When preparing a dispersion including acrylic acid as comonomer the stability is further improved at neutral pH (D14).

### Preparation of the polymer dispersions D15 - D21

| | |
|---|---|
| Initiator feed: | 42.86 g of a 7 wt% strength aqueous solution of sodium peroxodisulphate |
| Monomer feed: | 232 g nBA (58 wt%) |
| | 168 g MMA (42 wt%) |
| Block copolymer feed: | 304.61 g of a 2.63 wt% strength aqueous solution of the block copolymer according to table 8 (2 pphm) |

In a 2 L reactor with anchor stirrer, 15.76 g of a 33 wt.% aqueous polystyrene seed (weight-average particle diameter 30 nm), 267,64 g deionised water were filled under a nitrogen atmosphere and heated up. After reaching an internal temperature of 85 °C, 8.57 g of initiator feed were added within 2 minutes and stirred for 5 minutes. Then beginning simultaneously and with maintenance of the internal temperature of 85 °C, 34.29 g initiator feed, the monomer feed and the block copolymer feed were added over 180 minutes with a constant flow rate. Thereafter the reaction mixture was stirred for another 30 minutes at 85 °C. Then 7.63 g acetone bisulfite and 6 g tert-butyl hydroperoxide were added over the course of 60 minutes. The dispersion was then cooled to room temperature. This gave a polymer dispersion having a solids content of 39 wt%.

### Preparation of the polymer dispersions D22-D24

D22-D24 were prepared in analogy to D15. Only monomer feeds were changed to:

| | |
|---|---|
| Monomer feed (D22): | 140 g nBA (35 wt%) |
| | 260 g MMA (65 wt%) |
| Monomer feed (D23): | 232 g nBA (58 wt%) |
| | 168 g S (42 wt%) |
| Monomer feed (D24): | 200 g EHA (50 wt%) |
| | 200 g MMA (50 wt%) |
| Monomer feed (D25): | 160 g nBA (40 wt%) |
| | 180 g MMA (45 wt%) |
| | 60 g EHA (15 wt%) |
| Monomer feed (D26): | 160 g nBA (40 wt%) |
| | 100 g MMA (25 wt%) |
| | 80 g S (20 wt%) |
| | 60 g EHA (15 wt%) |

**Table 8: Dispersion D15 - D26**

| Dispersion | AB Block No | A / B | D [nm] | pH | Surface tension [mN/m] | Max Shear stability [rpm] | Max NaCl stability [%] | Max CaCl₂ stability [%] |
|---|---|---|---|---|---|---|---|---|
| D15 | 2.1 | 20/10 | 129 | 2.1 | 55 | 7500 | 2.5 | 0.1 |
| D16 | 2.4 | 30/10 | n.d. | 1.8 | 49 | 7500 | <2.5 | 0.1 |
| D17 | 2.3 | 30/15 | n.d. | 1.8 | 51 | 5000 | <2.5 | 0.1 |
| D18 | 2.5 | 30/20 | n.d. | 1.5 | 55 | 2500 | <2.5 | 0.1 |
| D19 | 2.19 | 50/25 | 150 | 2.1 | 58 | <2500 | <2.5 | 0.1 |
| D20 | 2.18 | 50/38 | 156 | 2.1 | 63 | <2500 | <2.5 | 0.1 |
| D21 | 2.6 | 75/38 | 156 | 2.0 | 58 | <2500 | <2.5 | 0.1 |
| D22 | 2.1 | 20/10 | 133 | 2.1 | 53 | 10000 | 2.5 | 0.1 |
| D23 | 2.1 | 20/10 | 125 | 1.9 | 56 | 2500 | 2.5 | 0.1 |
| D24 | 2.1 | 20/10 | 132 | 2.2 | 54 | 7500 | 2.5 | 0.1 |
| D25 | 2.1 | 20/10 | 130 | 2.2 | 50 | 7500 | 2.5 | 0.1 |
| D26 | 2.1 | 20/10 | 119 | 2.2 | 53 | 7500 | 2.5 | 0.1 |

| | | | | | | | | |
|---|---|---|---|---|---|---|---|---|
| n.d.: not determined D: Average particle size | | | | | | | | |

### Preparation of the polymer dispersion D27 (not according the invention)

D27 was prepared in analogy to D15. Instead using 2 pphm of block copolymer, 2 pphm of an ethoxylated fatty alcohol (Disponil SDS15) was used. Additionally, the Disponil SDS15 was feeded together with the monomers instead of a separated feed:

| | |
|---|---|
| Feed: | 232 g nBA (58 wt%) |
| | 168 g MMA (42 wt%) |
| | 251.28 g deionised water |
| | 53.33 g of a 15 wt% aqueous solution of Disponil SDS15 (2 pphm) |

### Preparation of the polymer dispersions D28 and D29 (not according the invention)

D28 and D29 were prepared in analogy to D15. Instead using 2 pphm of block copolymer 2.1, 2 pphm of the block copolymer poly (S-b-NaSS) 20-b-10 (example 2.25) was used:

| | |
|---|---|
| Monomer feed (D28): | 232 g nBA (58 wt%) |
| | 168 g S (42 wt%) |
| Monomer feed (D29): | 232 g nBA (58 wt%) |
| | 168 g MMA (42 wt%) |

### Preparation of the polymer dispersions D30 (not according the invention)

D30 were prepared in analogy to D15. Instead using 2 pphm of block copolymer 2.1, 2 pphm of the block copolymer poly (n-BA-b-MAA) 20-b-11 (example 2.26) was used.

**Table 9: Dispersion D27 - D30**

| Dispersion | AB Block No | D [nm] | pH | Surface tension [mN/m] | Max Shear stability [rpm] | Max NaCl stability [%] | Max CaCl₂ stability [%] |
|---|---|---|---|---|---|---|---|
| D27 n.i. | -¹⁾ | 126 | 1.6 | 42 | 7500 | 2.5 | 0.1 |
| D28 n.i. | 2.25 S/NaSS | 144 | 2 | 55 | <2500 | <2.5 | <0.1 |
| D29 n.i | 2.25 S/NaSS | 131 | 2 | 50 | 2500 | <2.5 | 0.1 |
| D30 n.i. | 2.26 | * | * | * | * | * | * |

| | | | | | | | |
|---|---|---|---|---|---|---|---|
| n.i. not according the invention - comparative D: Average particle size ¹⁾ ethoxylated fatty alcohol (Disponil SDS15) was used instead of the block copolymer *: Determination not possible, dispersion coagulated while synthesis | | | | | | | |

D27 (not according the invention) has a comparatively low surface tension since. This dispersion will show disadvantages in water sensitivity and leaching compared to dispersions D1 to D24 with comparatively high surface tension.

In order to be able to compare the influence of different block copolymers, it is necessary to compare examples with the same monomer compositions. The examples D23 and D15 are suitable as a comparison to the non-inventive examples D28 and D29. Although D28 and D29 show a sufficient surface tension, they do not exhibit enough colloidal stability in terms of shear load and electrolytes, as dispersion D15 and D23 do.

Since dispersion D30 (not according the invention) coagulated already during the start of the free radical emulsion polymerization, it was not possible to determine the surface tension, shear stability and salt stability. Example D30 proves that polymerization in the presence of carboxyl group-containing block copolymers is not possible when this is carried out in the acidic pH range. In order to limit the comparability of the dispersions to the block copolymer only, polymerization is carried out in the acidic medium.

## Claims

1. A process of producing a polymeric dispersion by free radical emulsion polymerization of a monomer composition comprising ethylenically unsaturated monomers in the presence of a block copolymer, whereas the block copolymer has a first block comprising at least 80 wt.-% units of alkyl acrylate and a second block comprising units of an ethylenically unsaturated monomer with sulfonic acid groups whereas either the first or the second block is connected with a nitroxyl radical.

2. The process according to claim 1, whereas the second block has a terminal group which is a nitroxyl radical.

3. The process according to either of claims 1 or 2, wherein the alkyl acrylate is n-butyl acrylate.

4. The process according to any of claims 1 to 3, wherein the ethylenically unsaturated monomer with sulfonic acid groups is selected from the group consisting of styrene sulfonic acid, alkali salts of styrene sulfonic acid and ammonium salts of styrene sulfonic acid.

5. The process according to any of claims 1 to 4, wherein the nitroxyl radical is of the formula Z 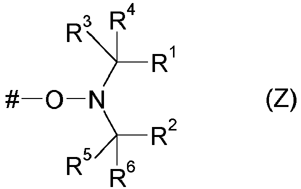 in which # denotes the attachment to a C atom of the polymer block,
R¹ and R² independently of one another are C₁-C₂₀ alkyl, which optionally carry a substituent selected from C₁-C₄ alkoxy, C₁-C₄ alkoxy-C₁-C₄ alkoxy and PO₃R^{z}₂, and R^{z} is C₁-C₄ alkyl, or are phenyl or are C₇-C₁₈ aralkyl or
R¹ and R² together are linear C₂-C₁₀ alkylene or linear C₂-C₁₀ alkenylene in which optionally one or two CH₂ groups may have been independently of another replaced by O, C=O, C=NOH, CH-OCOCH₃ or NR^{x}, where linear C₂-C₁₀ alkylene and linear C₂-C₁₀ alkenylene are unsubstituted or have 1, 2, 3, 4 or 5 substituents from the group C₁-C₄ alkyl, C₁-C₄ alkoxy, C₁-C₄ alkoxy-C₁-C₄ alkoxy, COOH, and CONH₂, and R^{x} is C₁-C₄ alkyl or C₁-C₄ alkoxy;
R³ is C₁-C₄ alkyl or H;
R⁴, R⁵, and R⁶ independently of one another are C₁-C₄ alkyl, and more particularly methyl or ethyl.

6. The process according to any of claims 1 to 5, wherein the block copolymer has ≤ 80 average repeating units of n-butyl acrylate.

7. The process according to any of claims 1 to 6, wherein the molar ratio of the monomers of the first block to the monomers of the second block is 1 : 1 to 8 : 1.

8. The process according to any of claims 3 to 6, wherein 0.1 to 10 parts by weight of block copolymer based on 100 parts by weight of total monomers is used in free radical emulsion polymerization.

9. The process according to any of claims 1 to 7, wherein the emulsion polymerization is carried out as a feed process.

10. A block copolymer which has a first block comprising at least 80 wt.-% units of alkyl acrylate and a second block comprising units of an ethylenically unsaturated monomer with sulfonic acid groups whereas either the first or the second block has a terminal group which is a nitroxyl radical.

11. A block copolymer according to claim 10, wherein one block is connected with a nitroxyl radical of formula Z and the other block is connected with X, which is selected from the group consisting of -CH₂-phenyl, -CHCH₃-phenyl, -C(CH₃)₂-phenyl, -C(C₅-C₆₋cycloalkyl)₂-CN, -C(CH₃)₂CN, -CH₂CH=CH₂, -CH₃CH-CH=CH₂, -(C₁-C₄alkyl)CR⁷-C(O)-phenyl, -(C₁-C₄)alkyl-CR⁷-C(O)-(C₁-C₄)alkoxy, -(C₁-C₄)alkyl-CR⁷-C(O)-(C₁-C₄)alkyl, -(C₁-C₄)alkyl-CR⁷-C(O)-N-di(C₁-C₄)alkyl, -(C₁-C₄)alkyl-CR⁷-C(O)-NH(C₁-C₄)alkyl, and -(C₁-C₄)alkyl-CR⁷-C(O)-NH₂, wherein R⁷ is hydrogen or (C₁-C₄)alkyl.

12. A block copolymer according to claim 10 and 11, in which the monomer with sulfonic acid groups is selected from the group consisting of styrene sulfonic acid, alkali salts of styrene sulfonic acid and ammonium salts of styrene sulfonic acid and in which the molar ratio of the monomers of the first block to the monomers of the second block is 1 : 1 to 8 : 1.

13. A block copolymer according to any of claims 10 to 12, in which the nitroxyl radical is of the formula

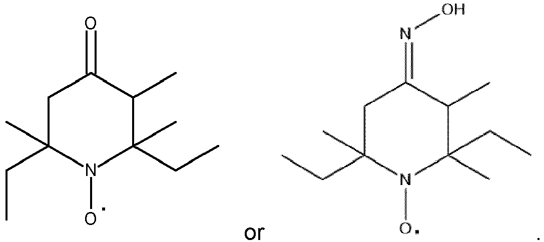

14. Use of a block copolymer according to claim 10 to 13 as emulsifying agent for free radical emulsion polymerization.

15. Aqueous polymeric dispersions obtainable by the process according to any of claims 1 to 9.

## Patentansprüche

1. Verfahren zur Herstellung einer Polymerdispersion durch radikalische Emulsionspolymerisation einer Monomerzusammensetzung, die ethylenisch ungesättigte Monomere umfasst, in Gegenwart eines Blockcopolymers, wobei das Blockcopolymer einen ersten Block aufweist, der wenigstens 80 Gew.-% Alkylacrylateinheiten umfasst, und einen zweiten Block, der Einheiten eines ethylenisch ungesättigten Monomers mit Sulfonsäuregruppen umfasst, wobei entweder der erste oder der zweite Block mit einem Nitroxylrest verbunden ist.

2. Verfahren nach Anspruch 1, wobei der zweite Block eine Endgruppe aufweist, die ein Nitroxylrest ist.

3. Verfahren nach einem der Ansprüche 1 oder 2, wobei das Alkylacrylat n-Butylacrylat ist.

4. Verfahren nach einem der Ansprüche 1 bis 3, wobei das ethylenisch ungesättigte Monomer mit Sulfonsäuregruppen ausgewählt ist aus der Gruppe bestehend aus Styrolsulfonsäure, Alkalisalzen von Styrolsulfonsäure und Ammoniumsalzen von Styrolsulfonsäure.

5. Verfahren nach einem der Ansprüche 1 bis 4, wobei der Nitroxylrest von der Formel Z ist, 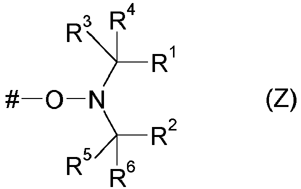
wobei # die Bindung an ein C-Atom des Polymerblocks bezeichnet,
R¹ und R² unabhängig voneinander C₁-C₂₀-Alkyl sind, das gegebenenfalls einen Substituenten ausgewählt aus C₁-C₄-Alkoxy, C₁-C₄-Alkoxy-C₁-C₄-alkoxy und PO₃R^{Z}₂ trägt und R^{Z} C₁-C₄-Alkyl ist, oder Phenyl sind oder C₇-C₁₈-Aralkyl sind, oder
R¹ und R² zusammen lineares C₂-C₁₀-Alkylen oder lineares C₂-C₁₀-Alkenylen sind, wobei gegebenenfalls eine oder zwei CH₂-Gruppen unabhängig voneinander durch O, C=O, C=NOH, CH-OCOCH₃ oder NR^{x} ersetzt worden sein können, wobei lineares C₂-C₁₀-Alkylen und lineares C₂-C₁₀-Alkenylen unsubstituiert sind oder 1, 2, 3, 4 oder 5 Substituenten aus der Gruppe C₁-C₄-Alkyl, C₁-C₄-Alkoxy, C₁-C₄-Alkoxy-C₁-C₄-alkoxy, COOH und CONH₂ aufweisen und R^{x} C₁-C₄-Alkyl oder C₁-C₄-Alkoxy ist;
R³ C₁-C₄-Alkyl oder H ist;
R⁴, R⁵ und R⁶ unabhängig voneinander C₁-C₄-Alkyl und insbesondere Methyl oder Ethyl sind.

6. Verfahren nach einem der Ansprüche 1 bis 5, wobei das Blockcopolymer im Mittel ≤ 80 n-Butylacrylat-Wiederholungseinheiten aufweist.

7. Verfahren nach einem der Ansprüche 1 bis 6, wobei das Molverhältnis der Monomere des ersten Blocks zu den Monomeren des zweiten Blocks 1 : 1 bis 8 : 1 beträgt.

8. Verfahren nach einem der Ansprüche 3 bis 6, wobei 0,1 bis 10 Gewichtsteile Blockcopolymer bezogen auf 100 Gewichtsteile an gesamten Monomeren bei der radikalischen Emulsionspolymerisation verwendet werden.

9. Verfahren nach einem der Ansprüche 1 bis 7, wobei die Emulsionspolymerisation als Zuführverfahren durchgeführt wird.

10. Blockcopolymer mit einem ersten Block, der wenigstens 80 Gew.-% Alkylacrylateinheiten umfasst, und einem zweiten Block, der Einheiten eines ethylenisch ungesättigten Monomers mit Sulfonsäuregruppen umfasst, wobei entweder der erste oder der zweite Block eine Endgruppe aufweist, die ein Nitroxylrest ist.

11. Blockcopolymer nach Anspruch 10, wobei ein Block mit einem Nitroxylrest der Formel Z verbunden ist und der andere Block mit X verbunden ist, das ausgewählt ist aus der Gruppe bestehend aus -CH₂-Phenyl, -CHCH₃-Phenyl, - C(CH₃)₂-Phenyl, -C(C₅-C₆-Cycloalkyl)₂-CN, -C(CH₃)₂CN, - CH₂CH=CH₂, -CH₃CH-CH=CH₂, -(C₁-C₄-Alkyl)CR⁷-C(O)-phenyl, - (C₁-C₄)Alkyl-CR⁷-C(O)-(C₁-C₄)alkoxy, -(C₁-C₄)Alkyl-CR⁷-C(O)-(C₁-C₄)alkyl, -(C₁-C₄)Alkyl-CR⁷C(O)-N-di(C₁-C₄)alkyl, -(C₁-C₄)Alkyl-CR⁷-C(O)-NH(C₁-C₄)alkyl und -(C₁-C₄)Alkyl-CR⁷-C(O)-NH₂, wobei R⁷ Wasserstoff oder (C₁-C₄)Alkyl ist.

12. Blockcopolymer nach Anspruch 10 und 11, wobei das Monomer mit Sulfonsäuregruppen ausgewählt ist aus der Gruppe bestehend aus Styrolsulfonsäure, Alkalisalzen von Styrolsulfonsäure und Ammoniumsalzen von Styrolsulfonsäure und wobei das Molverhältnis der Monomere des ersten Blocks zu den Monomeren des zweiten Blocks 1 : 1 bis 8 : 1 beträgt.

13. Blockcopolymer nach einem der Ansprüche 10 bis 12, wobei der Nitroxylrest von der Formel 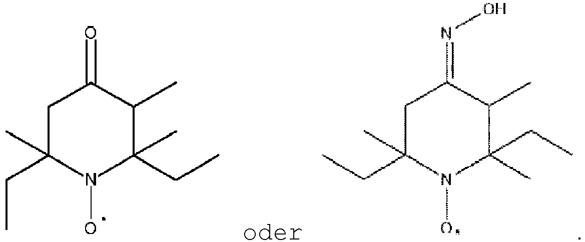 ist.

14. Verwendung eines Blockcopolymers nach Anspruch 10 bis 13 als Emulgiermittel zur radikalischen Emulsionspolymerisation.

15. Wässrige Polymerdispersion, erhältlich durch das Verfahren nach einem der Ansprüche 1 bis 9.

## Revendications

1. Procédé de production d'une dispersion polymérique par polymérisation en émulsion radicalaire d'une composition de monomères comprenant des monomères éthyléniquement insaturés en présence d'un copolymère séquencé, le copolymère séquencé ayant un premier bloc comprenant au moins 80 % en poids d'unités d'acrylate d'alkyle et un deuxième bloc comprenant des unités d'un monomère éthyléniquement insaturé comportant des groupes acide sulfonique tandis que soit le premier, soit le deuxième bloc est relié à un radical nitroxyle.

2. Procédé selon la revendication 1, dans lequel le deuxième bloc a un groupe terminal qui est un radical nitroxyle.

3. Procédé selon l'une ou l'autre des revendications 1 ou 2, dans lequel l'acrylate d'alkyle est l'acrylate de n-butyle.

4. Procédé selon l'une quelconque des revendications 1 à 3, dans lequel le monomère éthyléniquement insaturé comportant des groupes acide sulfonique est choisi dans le groupe constitué par l'acide styrène sulfonique, les sels de métaux alcalins de l'acide styrène sulfonique et les sels d'ammonium de l'acide styrène sulfonique.

5. Procédé selon l'une quelconque des revendications 1 à 4, dans lequel le radical nitroxyle est de la formule Z 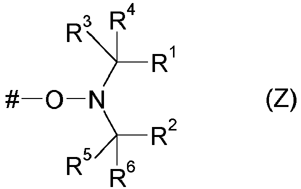
dans laquelle # désigne la fixation à un atome de C du bloc de polymère,
R¹ et R² indépendamment l'un de l'autre sont C₁-C₂₀ alkyle, qui porte éventuellement un substituant choisi parmi C₁-C₄ alcoxy, C₁-C₄ alcoxy-C₁-C₄ alcoxy et PO₃R^{Z}₂, et R^{Z} est C₁-C₄ alkyle, ou sont phényle ou sont C₇-C₁₈ aralkyle ou R¹ et R² conjointement sont C₂-C₁₀ alkylène linéaire ou C₂-C₁₀ alcénylène linéaire dans lesquels éventuellement un ou deux groupes CH₂ peuvent être indépendamment l'un de l'autre remplacés par O, C=O, C=NOH, CH-OCOCH₃ ou NR^{x}, dans lequel C₂-C₁₀ alkylène linéaire et C₂-C₁₀ alcénylène linéaire sont non substitués ou possèdent 1, 2, 3, 4 ou 5 substituants du groupe C₁-C₄ alkyle, C₁-C₄ alcoxy, C₁-C₄ alcoxy-C₁-C₄ alcoxy, COOH, et CONH₂, et R^{x} est C₁-C₄ alkyle ou C₁-C₄ alcoxy ;
R³ est C₁-C₄ alkyle ou H ;
R⁴, R⁵, et R⁶ indépendamment l'un de l'autre sont C₁-C₄ alkyle, et plus particulièrement méthyle ou éthyle.

6. Procédé selon l'une quelconque des revendications 1 à 5, dans lequel le copolymère séquencé a en moyenne ≤ 80 unités répétitives d'acrylate de n-butyle.

7. Procédé selon l'une quelconque des revendications 1 à 6, dans lequel le rapport molaire des monomères du premier bloc sur les monomères du deuxième bloc est 1 : 1 à 8 : 1.

8. Procédé selon l'une quelconque des revendications 3 à 6, dans lequel 0,1 à 10 parties en poids de copolymère séquencé sur la base de 100 parties en poids de monomères totaux sont utilisées dans la polymérisation en émulsion radicalaire.

9. Procédé selon l'une quelconque des revendications 1 à 7, dans lequel la polymérisation en émulsion est effectuée sous forme d'un procédé d'alimentation.

10. Copolymère séquencé qui a un premier bloc comprenant au moins 80 % en poids d'unités d'acrylate d'alkyle et un deuxième bloc comprenant des unités d'un monomère éthyléniquement insaturé comportant des groupes acide sulfonique tandis que soit le premier, soit le deuxième bloc a un groupe terminal qui est un radical nitroxyle.

11. Copolymère séquencé selon la revendication 10, dans lequel un bloc est relié à un radical nitroxyle de formule Z et l'autre bloc est relié à X, qui est choisi dans le groupe constitué par -CH₂-phényle, -CHCH₃-phényle, - C(CH₃)₂-phényle, -C(C₅-C₆-cycloalkyl)₂-CN, -C(CH₃)₂CN, - CH₂CH=CH₂, -CH₃CH-CH=CH₂, -(C₁-C₄alkyl)CR⁷-C(O)-phényle, - (C₁-C₄)alkyl-CR⁷-C(O)-(C₁-C₄)alcoxy, -(C₁-C₄)alkyl-CR⁷-C(O)-(C₁-C₄)alkyle, -(C₁-C₄)alkyl-CR⁷-C(O)-N-di (C₁-C₄)alkyle, -(C₁-C₄)alkyl-CR⁷-C(O)-NH(C₁-C₄)alkyle, et - (C₁-C₄)alkyl-CR⁷-C(O)-NH₂, dans lequel R⁷ est hydrogène ou (C₁-C₄)alkyle.

12. Copolymère séquencé selon la revendication 10 et 11, dans lequel le monomère comportant des groupes acide sulfonique est choisi dans le groupe constitué par l'acide styrène sulfonique, les sels de métaux alcalins de l'acide styrène sulfonique et les sels d'ammonium de l'acide styrène sulfonique et dans lequel le rapport molaire des monomères du premier bloc sur les monomères du deuxième bloc est 1 : 1 à 8 : 1.

13. Copolymère séquencé selon l'une quelconque des revendications 10 à 12, dans lequel le radical nitroxyle est de la formule

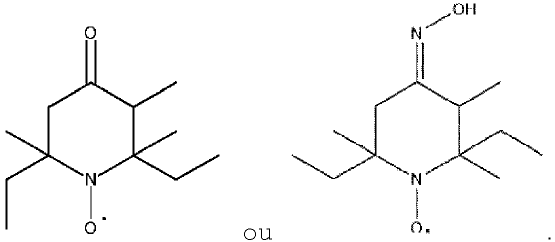

14. Utilisation d'un copolymère séquencé selon la revendication 10 à 13 comme agent émulsifiant pour une polymérisation en émulsion radicalaire.

15. Dispersions aqueuses polymériques pouvant être obtenues par le procédé selon l'une quelconque des revendications 1 à 9.
